(19) Europäisches Patentamt
European Patent Office
Office européen des brevets

(11) Veröffentlichungsnummer: **0 350 684 B1**

(12) # EUROPÄISCHE PATENTSCHRIFT

(45) Veröffentlichungstag der Patentschrift: **13.10.93**

(51) Int. Cl.[5]: **C08F 8/14**, C08F 8/44, C09D 135/02

(21) Anmeldenummer: **89111519.8**

(22) Anmeldetag: **24.06.89**

(54) **Oxidativ vernetzbare, wasserverdünnbare Bindemittel, Verfahren zu ihrer Herstellung und ihre Verwendung.**

(30) Priorität: **07.07.88 DE 3822995**

(43) Veröffentlichungstag der Anmeldung:
**17.01.90 Patentblatt 90/03**

(45) Bekanntmachung des Hinweises auf die Patenterteilung:
**13.10.93 Patentblatt 93/41**

(84) Benannte Vertragsstaaten:
**AT BE CH DE ES FR GB IT LI NL SE**

(56) Entgegenhaltungen:
**DE-A- 3 514 878**
**FR-A- 2 155 983**

(73) Patentinhaber: **BAYER AG**

**D-51368 Leverkusen(DE)**

(72) Erfinder: **Blum, Harald, Dr.**
**Auf dem Westkamp 1**
**D-4175 Wachtendonk 1(DE)**
Erfinder: **Höhlein, Peter, Dr.**
**Windmühlenweg 3e**
**D-4152 Kempen 3(DE)**
Erfinder: **Sonntag, Michael, Dr.**
**Gatenstrasse 27a**
**D-5068 Odenthal(DE)**
Erfinder: **Wellner, Wolfgang, Dr.**
**Bachstrasse 1**
**D-5060 Bergisch Gladbach 2(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 350 684 B1

## Beschreibung

Die Erfindung betrifft oxidativ vernetzbare, wasserverdünnbare Bindemittel, die chemisch eingebaute Carboxylatgruppen und olefinisch ungesättigte, zur oxidativen Trocknung befähigte Kohlenwasserstoffreste enthalten, ein Verfahren zur Herstellung dieser Bindemittel und ihre Verwendung in Lacken, Beschichtungs- und Dichtmassen.

Oxidativ trocknende, wasserlösliche Bindemittel auf Alkydharzbasis sind bekannt (vgl. z.B. deutsche Patentschrift 1 669 141, EP-A-2 488 und dort zitierte Literatur). Daraus hergestellte Überzüge zeichnen sich üblicherweise durch gute filmoptische und filmmechanische Werte aus. Problematisch ist die durch das Polyestergrundgerüst gegebene, relativ hohe Verseifungsanfälligkeit solcher Produkte in wäßriger, neutralisierter Lösung. Bei Lagerung kommt es zur Phasentrennung bzw. zum Absetzen. Wünschenswert bei solchen wäßrigen Alkydharzen ist darüber hinaus auch eine Verkürzung der Trockenzeiten.

Eine Alternative zu solchen Bindemitteln bilden die rein physikalisch trocknenden Polymerisatbindemittel, die sich durch sehr schnelle Trocknung und ausgezeichnete Lagerstabilität auszeichnen (vgl. z.B. DE-OS 3 209 421, EP-A-95 263, G. Y. Talak, S. P. Pontis, Paint & Resin 12/83, S. 34ff.). Nachteilig bei solchen Produkten sind jedoch die in der Regel weniger guten filmoptischen Werte der Überzüge und die aufgrund fehlender chemischer Vernetzung niedrigen Lösemittelbeständigkeiten.

Um diese Systeme widerstandsfähiger gegen Außeneinflüsse zu machen, wurden die bei Raumtemperatur trocknenden Polyacrylate mit oxidativ vernetzbaren Komponenten modifiziert, z.B. durch Umsetzung von Glycidylcopolymerisaten mit trocknenden Fettsäuren (z.B. GB-PS 793 776 und 1 227 398) oder durch Veresterung von OH-funktionellen Copolymerisaten mit trocknenden Fettsäuren (z.B. DE-OS 2 728 568).

Aufgrund ihres Preises und einiger lacktechnischer Nachteile wie z.B. langsame Trocknung und Probleme beim Überarbeiten, hervorgerufen durch eine ausgeprägte Neigung zum Hochziehen des überlackierten Films, konnten sich diese Bindemittel nicht durchsetzen.

Darüber hinaus eignen sich solche Bindemittel nicht für den Einsatz in wasserverdünnbaren Systemen.

Aufgabe der Erfindung war daher die Bereitstellung eines Bindemittels, welches eine rasche physikalische Trocknung von Überzügen mit guten filmoptischen Werten garantiert, zusätzlich oxidativ vernetzt, in wäßrigen Systemen einsetzbar, verseifungs- bzw. lagerstabil ist und darüber hinaus in seiner wäßrigen, neutralisierten Form möglichst wenig organische Lösungsmittel, bevorzugt weniger als 10 %, enthält.

Die Aufgabe konnte dadurch gelöst werden, daß durch eine radikalisch initiierte Copolymerisation von copolymerisierbaren Anhydriden und anderen olefinisch ungesättigten Monomeren wie z.B. (Meth)-acrylsäurederivaten, Vinylaromaten, Vinylestern bzw. Vinylethern in der Schmelze bzw. in organischer Lösung Copolymerisate hergestellt und anschließend mit zur oxidativen Trocknung befähigten Monoalkoholen, sowie gegebenenfalls niedermolekularen einwertigen Alkoholen modifiziert werden, worauf sich eine zumindest teilweise Neutralisation der vorliegenden Carboxylgruppen anschließt. Gemäß einer besonderen Variante kann hierbei auch ein Teil der nach der Modifizierung vorliegenden Carboxylgruppen mit Epoxidgruppen aufweisenden Verbindungen zur Reaktion gebracht werden, um auf diese Weise die Eigenschaften der Bindemittel zu variieren. Die so erhaltenen Bindemittel sind nach teilweiser bzw. vollständiger Neutralisation der verbleibenden Carboxylgruppen wasserverdünnbar.

Gegenstand der Erfindung sind oxidativ vernetzbare, wasserverdünnbare Bindemittel, bestehend im wesentlichen aus einem modifizierten Copolymerisat des Molekulargewichtsbereichs Mw 6000 bis 160000 von olefinisch ungesättigten Verbindungen, gekennzeichnet durch

a) einen, die Wasserverdünnbarkeit bewirkenden, Gehalt an eingebauten, zu 10 bis 100 % neutralisierten Carboxylgruppen von insgesamt 60 bis 250 Milliäquivalenten pro 100 g Feststoff und

b) einen Gehalt an chemisch eingebauten, Teil einer Estergruppe bildenden Resten der Formel

-O-R

von 15 bis 50 Gew.-%, wobei

R für ein- und/oder mehrfach olefinisch ungesättigte aliphatische Kohlenwasserstoffreste eines über 166 liegenden Molekulargewichts mit 12 bis 22 Kohlenstoffatomen steht.

Gegenstand der Erfindung ist auch ein Verfahren zur Herstellung dieser Bindemittel, welches dadurch gekennzeichnet ist, daß man

a) durch radikalisch initiierte Copolymerisation von olefinisch ungesättigten Dicarbonsäureanhydriden mit anderen olefinisch ungesättigten Monomeren ein, intramolekulare Carbonsäureanhydridgruppen der Formel

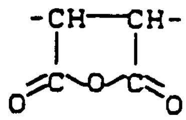

aufweisendes Copolymerisat des Molekulargewichts Mw 5000 bis 80000 und eines Anhydridäquivalentgewichts von 240 bis 1960 herstellt,

b) anschließend mindestens 50 % der in dem Copolymerisat vorliegenden Säureanhydridgruppen mit einwertigen Alkoholen der Formel

R-OH,

wobei R die oben genannte Bedeutung hat, unter ringöffnender Esterbildung zur Reaktion bringt, wobei gegebenenfalls vor, gleichzeitig oder im Anschluß hieran eine analoge Umsetzung von bis zu 50 % der Anhydridgruppen mit einwertigen gesättigten Alkoholen eines unter 184 liegenden Molekulargewichts erfolgt und

c) die in dem Reaktionsprodukt gemäß Stufe b) vorliegenden Carboxylgruppen, gegebenenfalls nach Umsetzung einer Teilmenge der Carboxylgruppen mit organischen Epoxidverbindungen zu 10 bis 100 % (der dann noch vorliegenden Carboxylgruppen) durch Neutralisation mit einer Base in Carboxylatgruppen überführt.

Gegenstand der Erfindung ist schließlich auch die Verwendung dieser Bindemittel in wasserverdünnbaren Lacken und Beschichtungsmassen.

Die in der Stufe a) des erfindungsgemäßen Verfahrens hergestellten Copolymerisate weisen ein, nach der Methode der Gelpermeationschromatographie bestimmbares, Molekulargewicht Mw von 5000 bis 80000, vorzugsweise 10000 bis 50000 und ein Anhydridäquivalentgewicht von 240 bis 1960, vorzugsweise 320 bis 980 auf. Unter "Anhydridäquivalentgewicht" ist hierbei das Gewicht in g zu verstehen, welches einem Mol an einpolymerisierten intramolekularen Säureanhydridgruppen entspricht.

Die Herstellung der Copolymerisate in der Stufe a) erfolgt durch radikalisch initiierte Copolymerisation von olefinisch ungesättigten intramolekularen Dicarbonsäureanhydriden mit beliebigen anderen olefinisch ungesättigten Monomeren.

Vorzugsweise gelangt bei dieser Copolymerisation ein Monomerengemisch, bestehend aus

i) 5 bis 40 Gew.-Teilen copolymerisierbaren Dicarbonsäureanhydriden wie z.B. Itaconsäureanhydrid oder Maleinsäureanhydrid, vorzugsweise Maleinsäureanhydrid,

ii) 45 bis 95 Gew.-Teilen Monomeren, ausgewählt aus der Gruppe bestehend aus Vinylaromaten, Isopropenylaromaten, Vinylestern, Vinylethern, Methacrylsäureestern mit 1 bis 6 Kohlenstoffatomen im Alkoholrest und beliebigen Gemischen derartigen Monomerer

und

iii) 0 bis 50 Gew.-Teilen an Monomeren, ausgewählt aus der Gruppe bestehend aus Acrylsäureestern mit 1 bis 18 Kohlenstoffatomen im Alkoholrest, Methacrylsäureestern mit 7 bis 18 Kohlenstoffatomen im Alkoholrest und beliebigen Gemischen derartiger Monomerer

zum Einsatz.

Geeignete Monomere aus der Gruppe ii) sind beispielsweise Styrol, α-Methylstyrol, Vinyltoluol, am aromatischen Ring $C_1$-$C_4$-alkylsubstituierte Styrole, Vinylacetat, Vinylpropionat, Vinylbutyrat, Ethylvinylether, Butylvinylether, Methylmethacrylat, Ethylmethacrylat, n-Butylmethacrylat, iso-Butylmethacrylat, n-Hexylmethacrylat oder Cyclohexylmethacrylat.

Geeignete Monomere aus der Gruppe iii) sind beispielsweise Ethylacrylat, n-Butylacrylat, iso-Butylacrylat, n-Propylacrylat, n-Pentylacrylat, iso-Propylacrylat, Hexylacrylat, 2-Ethylhexylacrylat, n-Octylacrylat, Laurylacrylat, 2-Phenylethylacrylat, Benzylacrylat, Stearylacrylat, Cyclohexylacrylat, n-Octylmethacrylat, 2-Ethylhexylmethacrylat, Laurylmethacrylat, Caprinmethacrylat oder Stearylmethacrylat.

Bevorzugt werden zur Herstellung der Copolymerisate bei der Durchführung der Stufe a) des erfindungsgemäßen Verfahrens Monomerengemische folgender Zusammensetzung eingesetzt, wobei sich die nachstehenden Prozentangaben zu 100 ergänzen:

i) 10 bis 30 Gew.-% Maleinsäureanhydrid

ii) 65 bis 90 Gew.-% Styrol, Vinyltoluol, Methylmethacrylat, n-Butylmethacrylat, iso-Butylmethacrylat, n-Hexylmethacrylat, Cyclohexylmethacrylat und

iii) 0 bis 25 Gew.-% n-Butylacrylat, 2-Ethylhexylacrylat, Laurylacrylat, Stearylacrylat, 2-Phenylethylacrylat, 2-Ethylhexylmethacrylat, Stearylmethacrylat, Laurylmethacrylat, Caprinmethacrylat.

Die Herstellung der Copolymerisate erfolgt durch eine radikalisch initiierte Copolymerisation der Monomermischungen in organischer Lösung bzw. in der Schmelze. Dabei wird der Anteil an organischen Lösungsmittel vorzugsweise entweder von vornherein so bemessen, daß ein unter Verwendung des Copolymerisats hergestellter Lack ≦10 % Lösungsmittel enthält, oder alternativ dazu ein Teil des eingesetzten Lösungsmittels aus der Harzschmelze abdestilliert um im fertigen Lack den genannten niedrigen Lösungsmittelanteil zu erhalten.

Geeignete Lösungsmittel sind z.B. Dimethyldiglykol, Dimethylpropylenglykol, N-Methylpyrrolidon, Methylisobutylketon, Aceton. Anteilig können auch nicht wassermischbare Lösungsmittel wie z.B. Butylacetat, Methoxypropylacetat, Solvent-Naphtha, Testbenzin, Xylol, Toluol mitverwendet werden.

Als Initiatoren geeignet sind organische Peroxide wie z.B. Dibenzoylperoxid, Di-tert.-Butylperoxid, tert.-Butylperoxy-2-ethylhexanoat (tert.-Butylperoctoat), Didecanoylperoxid und Azoverbindungen wie z.B. Azodiisobuttersäurenitril in Mengen von 0,5 bis 10 Gew.-%.

Zur Erzielung des gewünschten Molekulargewichtes können auch Regler wie z.B. n-Dodecylmercaptan in Mengen von 0,01 bis 5 Gew.-% mitverwendet werden.

Die Copolymerisation wird im allgemeinen bei einer Temperatur von 60 bis 160 °C durchgeführt.

Die Copolymerisation wird vorzugsweise in mindestens 75 %iger Lösung durchgeführt, wobei üblicherweise das Lösungsmittel und gegebenenfalls ein Teil der Monomerenmischung vorgelegt und auf die gewünschte Reaktionstemperatur erwärmt wird. Die restliche Monomerenmischung und der Initiator werden während 3 bis 6 Stunden kontinuierlich zudosiert. Nach beendeter Polymerisation wird gegebenenfalls zumindest ein Teil des Lösungsmittels abdestilliert.

Die so hergestellten, intramolekulare Anhydridgruppen aufweisenden Copolymerisate werden dann gemäß der bevorzugten Variante des erfindungsgemäßen Verfahrens in der Stufe b) mit zur oxidativen Trocknung befähigten Monoalkoholen umgesetzt, wobei mindestens 50 %, vorzugsweise mindestens 85 % der Anhydridgruppen unter ringöffnender Veresterung in Halbester überführt werden, und wobei gegebenenfalls vor, gleichzeitig mit und/oder im Anschluß an diese Modifizierungsreaktion bis zu 50 %, vorzugsweise bis zu 15 % der Anhydridgruppen durch Umsetzung mit niedermolekularen, gesättigten einwertigen Alkoholen in Halbester überführt werden.

Bei den zur oxidativen Trocknung befähigten Monoalkoholen handelt es sich um ein- oder mehrfach olefinisch ungesättigte einwertige Alkohole eines über 183 liegenden Molekulargewichts der Formel

R-OH

wobei

R die bereits obengenannte Bedeutung hat und vorzugsweise für ein- oder mehrfach olefinisch ungesättigte aliphatische Kohlenwasserstoffreste mit 14 bis 18 Kohlenstoffatomen steht.

Geeignete derartige Alkohole sind beispielsweise Lauroleinalkohol, Oleylalkohol, Linoleylalkohol, Linolenylalkohol, Elaidylalkohol, Gadoleylalkohol, Arachidonalkohol, Erucaalkohol, Elupanodonalkohol und Gemische dieser Alkohole.

Bevorzugte Alkohole sind die aus natürlichen Ölen wie z.B. Sojaöl oder Leinöl durch Umesterung und Hydrierung erhaltenen Fettalkoholgemische wie z.B. ®Ocenol 110/130 oder ®Ocenol 150/170 (Handelsprodukt Fa. Henkel).

Die Halbesterbildung wird üblicherweise im Anschluß an die Herstellung der Copolymerisate dermaßen durchgeführt, daß der Alkohol bzw. das Alkoholgemisch zu dem Copolymerisat, welches gegebenenfalls von eventuell vorliegenden Lösungsmitteln ganz oder teilweise befreit worden ist, zudosiert wird und die Reaktionsmischung bei 100 bis 160 °C für 2 bis 10 Stunden, oder solange bis die Gesamtsäurezahl konstant ist, gehalten wird.

Die genannten ungesättigten Alkohole werden bei der Stufe b) des erfindungsgemäßen Verfahrens in solchen Mengen eingesetzt, daß mindestens 50 %, vorzugsweise mindestens 85 % der in den Copolymerisaten der Stufe a) vorliegenden Säureanhydridgruppen unter ringöffnender Esterbildung in Halbestergruppen überführt werden, d.h. das Molverhältnis von Anhydridgruppen zu Hydroxylgruppen der ungesättigten Alkohole liegt bei der Durchführung der Stufe b) im allgemeinen bei 1:0,5 bis 1:1, vorzugsweise bei 1:0,85 bis 1:1. Nach der Durchführung der Stufe b) des erfindungsgemäßen Verfahren liegen in den so modifizierten Copolymerisaten im allgemeinen zwischen 15 und 50 Gew.-%, vorzugsweise zwischen 20 und 40 Gew.-% an eingebauten, Teil einer Estergruppe bildenden Struktureinheiten der Formel

-O-R

vor.

Zur Gewährleistung der Wasserverdünnbarkeit der so erhaltenen, oxidativ trocknenden Bindemittel werden die vorliegenden Carboxylgruppen zumindest teilweise durch Neutralisation mit einer geeigneten Base in Carboxylatgruppen überführt.

Zur Neutralisation können wäßrige, anorganische Basen wie Z.B. Natriumhydroxid, Kaliumhydroxid oder Ammoniak verwendet werden. Ebenfalls geeignet sind organische Amine wie z.B. Trimethylamin, Triethylamin, Diethanolamin, Methyldiethanolamin, Dimethylethanolamin, Diethylethanolamin, Triethanolamin, 2-Amino-2-methyl-1-propanol, sowie Mischungen dieser und anderer Neutralisationsmittel.

Die Neutralisation kann beispielsweise nach folgenden Methoden erfolgen:
Ein Wasser/Neutralisationsmittel-Gemisch wird auf 40 bis 80 °C erwärmt und die heiße Harzschmelze oder -lösung darin eingerührt. Das Neutralisationsmittel kann, gegebenenfalls mit Wasser verdünnt, auch direkt zur Harzlösung gegeben werden und die neutralisierte Harzlösung dann durch Zugabe von Wasser auf den gewünschten Festkörpergehalt eingestellt werden.

Bei der Durchführung der Neutralisationsreaktion werden bis zu 100 %, vorzugsweise 20 bis 80 %, der vorliegenden Carboxylgruppen durch Neutralisation in Carboxylatgruppen überführt.

Gemäß einer besonderen Ausführungsform des erfindungsgemäßen Verfahrens werden, wie bereits angedeutet, bis zu 50 %, vorzugsweise bis zu 15 % der in den Copolymerisaten aus der Stufe a) vorliegenden Säureanhydridgruppen mit einwertigen gesättigten Alkoholen eines unter 184 liegenden Molekulargewichts unter ringöffnender Esterbildung zur Reaktion gebracht. Diese Umsetzung erfolgt in völliger Analogie zu der genannten Umsetzung mit den ungesättigten einwertigen Alkoholen und kann vor, gleichzeitig mit oder im Anschluß an die Modifizierung mit den ungesättigten Alkoholen stattfinden.

Vorzugsweise erfolgt diese Umsetzung im Anschluß an die Modifizierung gemäß Stufe b) und zwar so, daß die nach der Modifizierung mit den ungesättigten Alkoholen noch vorliegenden Säureanhydridgruppen zu mindestens 95 %, vorzugsweise zu 100 % unter ringöffnender Esterbildung in Halbestergruppen überführt werden. Um eine möglichst vollständige Umsetzung zu erreichen, kann auch ein Überschuß an niedermolekularem, einwertigem Alkohol eingesetzt werden. In einem solchen Falle könnte beispielsweise das Äquivalentverhältnis der Hydroxylgruppen der einwertigen Alkohole (zur oxidativen Trocknung befähigte Alkohole + einwertige gesättigte Alkohole eines unter 184 liegenden Molekulargewichts) zu Anhydridgruppen bei beispielsweise 1:1 bis 1,25:1 liegen.

Geeignete einwertige gesättigte Alkohole mit einem unter 184 liegenden Molekulargewicht sind z.B. Methanol, Ethanol, Propanol, n-Butanol, n-Pentanol, n-Hexanol, Cyclohexanol, Methylglykol, Ethylglykol, Butylglykol, Methoxypropanol, Ethoxypropanol, Butoxypropanol, Methyldiglykol, Ethyldiglykol, Butyldiglykol, Glykolsäuremethylester, Glykolsäureethylester, Milchsäuremethylester oder Gemische derartiger Alkohole.

Auch bei dieser Variante des erfindungsgemäße Verfahrens sind Art und Mengenverhältnisse der zum Einsatz gelangenden Reaktionspartner so zu wählen, daß in den resultierenden, modifizierten Copolymerisation 15 bis 50, vorzugsweise 20 bis 40 Gew.-% an Struktureinheiten der Formel

-O-R

vorliegen.

Auch bei dieser Variante des erfindungsgemäßen Verfahrens werden schließlich die vorliegenden Carboxylgruppen zumindest teilweise, vorzugsweise zu 20 bis 80 % durch Neutralisation in Carboxylatgruppen überführt.

Gemäß einer weiteren Variante des erfindungsgemäßen Verfahrens, die auch mit der zuletztgenannten Variante der zusätzlichen Modifizierung mit einwertigen Alkoholen eines unter 184 liegenden Molekulargewichts kombinierbar ist, werden die nach der Modifizierungsreaktion mit den einwertigen Alkoholen vorliegenden Carboxylgruppen teilweise durch Reaktion mit Epoxidgruppen aufweisenden organischen Verbindungen in Estergruppen überführt. Bezüglich der Menge der hierbei zum Einsatz gelangenden, Epoxidgruppen aufweisenden Verbindungen ist lediglich darauf zu achten, daß noch genügend Carboxylgruppen in nicht umgesetzter Form übrig bleiben, so daß durch deren Überführung in Carboxylatgruppen durch Neutralisation die Wasserverdünnbarkeit der Bindemittel gewährleistet bleibt. Im allgemeinen werden bei dieser Variante des erfindungsgemäßen Verfahrens bis zu 70 %, vorzugsweise bis zu 50 % der nach der Modifizierungsreaktion mit den einwertigen Alkoholen vorliegenden Carboxylgruppen mit den Epoxidgruppen aufweisenden Verbindungen umgesetzt.

Geeignete Epoxidgruppen aufweisende organische Verbindungen sind beispielsweise Monoepoxide, wie Ethylenoxid, Propylenoxid, 1,2-Epoxybutan, 1,2-Epoxy-2-methylpropan, 2,3-Epoxybutan, Styroloxid, 1,2-Epoxy-3-phenoxypropan, 1-Allyloxy-2,3-epoxypropan, Cyclohexenoxid, Methylglycidylether, tert.-Butylglycidylether, Glycidylmethacrylat, Glycidylester der Versaticsäure (z.B. ®Cardura E 10, Shell Chemie), Decylglycidylether oder Gemische derartiger und anderer Epoxide.

Zur Beschleunigung der Reaktion zwischen Carboxylgruppen und Epoxid können übliche Katalysatoren wie z.B. Tetrabutylammoniumbromid, Triethylbenzylammoniumchlorid, Tetraethylammoniumchlorid zugesetzt werden.

Die Reaktion wird üblicherweise bei 80 bis 150 °C während 3 bis 12 Stunden durchgeführt. Die solchermaßen mit Epoxiden modifizierten oxidativ trocknenden Copolymerisate können nun entsprechend den obengemachten Ausführungen durch zumindest teilweise Neutralisation der noch verbleibenden Carboxylgruppen in wasserverdünnbare Harze überführt werden.

Bei allen Varianten des erfindungsgemäßen Verfahren werden Art und Mengenverhältnisse der Ausgangsmaterialien, sowie der Neutralisationsgrad (= Prozentsatz der Carboxylgruppen, die durch Neutralisation in Carboxylatgruppen überführt worden sind) so bemessen, daß in den erfindungsgemäßen Bindemitteln 15 bis 50, vorzugsweise 20 bis 40 Gew.-% an Struktureinheiten der Formel

-O-R

vorliegen, und die Bindemittel einen Gehalt an Carboxylgruppen von 10 bis 250, vorzugsweise 80 bis 190 Milliäquivalent pro 100 g Feststoff aufweisen, die zu 10 bis 100, vorzugsweise 20 bis 80 % durch Umsetzung mit einer Base neutralisiert, d.h. in Carboxylatgruppen überführt worden sind. Die genannten Angaben bezüglich des Gehalts an Carboxylgruppen beziehen sich somit sowohl auf die freien, nicht neutralisierten Carboxylgruppen als auch die neutralisierten Carboxylgruppen, d.h. die dann vorliegenden Carboxylatgruppen.

Die erfindungsgemäßen Bindemittel fallen im allgemeinen bei Verwendung von wäßrigen Neutralisationsmitteln unmittelbar in Form von wäßrigen Dispersionen an. Gewünschtenfalls kann die Herstellung von wäßrigen Dispersionen auch im Anschluß an die wasserfrei durchgeführte Neutralisationsreaktion in an sich bekannter Weise erfolgen.

Zur Unterstützung der Wasserverdünnbarkeit bzw. Dispergierbarkeit ist es auch möglich, geringe Mengen, etwa 0,01 bis 2 % oberflächenaktive Substanzen zuzusetzen.

Die in wäßriger Form, vorzugsweise als 20 bis 50 gew.-%ige wäßrige Dispersion vorliegenden Bindemittel können gegebenenfalls noch geringe Mengen an organischen Lösungsmitteln (bis zu 20 Gew.-%, vorzugsweise jedoch weniger als 10 Gew.-%, bezogen auf Feststoff) enthalten. Die wäßrigen Dispersionen können direkt ohne weitere Zusätze als Lack für die Herstellung von klaren Überzügen eingesetzt werden.

In der Regel werden jedoch Pigmente und übliche Zusatzstoffe wie Trocknungsbeschleuniger, Antioxidantien, Hautverhinderungsmittel, Antischaummittel, Netzmittel, Füllstoffe usw. zugegeben.

Bevorzugte Trocknungsbeschleuniger sind die an sich bekannten Sikkative, d.h. Salze von (cyclo)-aliphatischen Monocarbonsäuren mit 6 bis 18 Kohlenstoffatomen mit Metallen wie beispielsweise Cobalt, Mangan, Nickel, Chrom, Zink, Zirkonium, Aluminium, Calcium, Barium oder Blei. Diese können sowohl in die Harzschmelze eingearbeitet, bei der Lackanreibung zugesetzt als auch nachträglich in den fertigen Lack eingearbeitet werden.

Pigmente, Zusatzstoffe und oxidativ trocknendes Copolymerisat werden zusammen in bekannter Weise zu fertigen Lacken angerieben. Als Mahlaggregat können z.B. Sandmühle, Perlmühle, Kugelmühle oder Dreiwalze verwendet werden.

Die fertigen Lacke enthalten bevorzugt weniger als 10 % flüchtige organische Verbindungen und haben üblicherweise Festgehalte von 30 bis 60 %.

Die oxidativ trocknenden Copolymerisate können in oder als wäßrige, lufttrocknende Beschichtungsmittel für Kunststoffe, Metalle, Glas, Holz, Papier, Pappe und Keramik verwendet werden. Weitere Anwendungsmöglichkeiten sind die Verwendung der Bindemittel in Druckfarben für Textil oder Leder, bzw. in Imprägnier- oder Verfestigungsmitteln für Papier, Textilien und Leder.

Die Überzugsmittel können nach herkömmlichen Techniken, z.B. Flut-, Tauch-, Spritz-, Streich-, Gieß- und Walzauftrag aufgebracht werden.

Die erfindungsgemäßen Systeme eignen sich besonders für die Anwendung bei Raumtemperatur. Zur Beschleunigung der Trockenzeit ist jedoch auch eine forcierte Wärmetrocknung bei etwa 60 bis 100 °C für 5 bis 30 Minuten möglich.

In den nachstehenden Beispielen sind Angaben über Teile und Prozente Gewichtsangaben und beziehen sich auf die nicht flüchtigen Festtoffe, falls nicht ausdrücklich etwas anderes festgestellt wird.

Beispiel 1

In einem 4-l-Dreihalskolben mit Rühr-, Kühl- und Heizvorrichtung werden 486 g Dimethyldiglykol vorgelegt und auf 130 °C erwärmt. In 3 Stunden wird eine Mischung aus 500 g Maleinsäureanhydrid, 400 g Styrol, 900 g Methylmethacrylat und 200 g n-Butylacrylat und parallel dazu in 4 Stunden 71 g tert.-Butylperoctoat (70 % in Kohlenwasserstoffgemisch) zudosiert. Nach 1 Stunde Rühren werden 5,6 g tert.-Butylperoctoat zugegeben und nochmals 2 Stunden gerührt. Anschließend werden 1200 g ®Ocenol 110/130 (ungesättigter Fettalkohol, Fa. Henkel) zugesetzt und die Reaktionsmischung 6 Stunden bei 135 °C gehalten. Nach Abkühlen auf 80 °C wird die 86,5 %ige Harzschmelze mit 12 g Kobaltoctoat und 85,4 g Bleioctoat versetzt. 3700 g dieser Harzschmelze werden in einem auf 45 °C erwärmten Wasser/Ammoniak-Gemisch dispergiert und 6 h bei 60 °C gerührt. Die wäßrige Harzdispersion wird dann noch mit 48 g Hautverhinderungsmittel ®Ascinin R conz (Bayer AG) versetzt und durch KoOO-Filter filtriert.

Die wäßrige Harzdispersion hat einen Festgehalt von 43,5 % und einen pH-Wert von 6,2. Das 100 %ige Harz weist einen Gehalt an Struktureinheiten -O-R von 36 Gew.-% und einen Gehalt an freien und neutralisierten Carboxylgruppen von insgesamt 220 Milliäquivalenten pro 100 g Feststoff, wobei der Neutralisationsgrad bei 20 % liegt.

Beispiel 2

In einem 4-l-Dreihalskolben mit Rühr-, Kühl- und Heizvorrichtung werden 196 g Dimethyldiglykol vorgelegt und auf 130 °C aufgeheizt. In 3 Stunden wird eine Mischung aus 240 g Maleinsäureanhydrid, 160 g Styrol, 300 g Butylacrylat und 1300 g Methylmethacrylat und in 4 Stunden 114 g tert.-Butylperoctoat (70 %ig in Kohlenwasserstoffgemisch) zudosiert. Nach 1 Stunde bei 130 °C werden nochmals 5,6 g tert.-Butylperoctoat zugegeben und 1 Stunde gerührt. Nach Zugabe von 136,2 g N-Methylpyrrolidon werden 612 g ®Ocenol 110/130 zugegeben und 6 Stunden bei 135 °C gerührt. Nach Verdünnen mit 108 g Butylglykol, Abkühlen auf 80 °C und Zugabe von 10,1 g Kobaltoctoat sowie 27 g ethoxyliertes Nonylphenyl (NP 20) erhält man eine 85 %ige Harzschmelze, die in eine auf 50 °C erwärmte Wasser/Ammoniak-Mischung eingerührt wird. Nach 4 Stunden Rühren bei 60 °C werden noch 40 g ®Ascinin R conz zugesetzt und durch KoOO-Filter abfiltriert.

Die wäßrige Harzdispersion hat einen Festgehalt von 36,5 % und einen pH-Wert von 6,9. Das 100 %ige Harz weist einen Gehalt an Struktureinheiten der Formel -O-R von 23 Gew.-% und einen Gehalt an freien und neutralisierten Carboxylgruppen von insgesamt 101 Milliäquivalenten pro 100 g Feststoff auf, wobei der Neutralisationsgrad bei 39,5 % liegt.

Beispiel 3

In einem 4-l-Dreihalskolben mit Rühr-, Kühl- und Heizvorrichtung werden 455 g Dimethyldiglykol vorgelegt und auf 130 °C erwärmt. In 3 Stunden wird eine Mischung aus 500 g Maleinsäureanhydrid, 400 g Styrol, 1100 g Methylmethacrylat und in 4 Stunden 114 g tert.-Butylperoctoat (70 %ig in Kohlenwasserstoffgemisch) zudosiert. Nach 1 Stunde bei 130 °C werden nochmals 5,6 g tert.-Butylperoctoat zugegeben, 2 Stunden gerührt, 1200 g ®Ocenol 110/130 zugegeben und weitere 6 Stunden bei 135 °C gerührt. Nach Verdünnen mit 134,8 g N-Methylpyrrolidon werden 27,5 g Ethanol zugegeben und 1 Stunde bei 120 °C gehalten. Dann werden 195,5 g Butylglykol zugegeben, weitere 2 Stunden bei 120 °C gerührt, auf 90 °C abgekühlt und nacheinander 163,9 g Butylglykol, 655,6 g Glycidylester der Versaticsäure (®Cardura E 10, Shell Chemie) und 3,9 g Triethylbenzylammoniumchlorid zugegeben. Anschließend wird bei 90 °C gerührt bis die Gesamtsäurezahl konstant ist. Anschließend werden 39,4 g ethoxyliertes Nonylphenol (NP 20) und 39,4 g Kobaltoctoat in 30 g Butylglykol zugegeben und homogen eingerührt.

Die so erhaltene 80 %ige Harzschmelze wird in eine auf 50 °C erwärmte, wäßrige Neutralisationsmittellösung (Ammoniak + 2-Amino-2-methyl-1-propanol (3:1)) eingerührt. Nach 4 Stunden Rühren bei 60 °C werden 60 g ®Ascinin R conz zugesetzt und durch KoOO-Filter abfiltriert.

Die wäßrige Harzdispersion hat einen Festgehalt von 38,0 % und einen pH-Wert von 7,1. Das 100 %ige Harz weist einen Gehalt an Struktureinheiten -O-R von 31 Gew.-% und einen Gehalt an freien und neutralisierten Carboxylgruppen von insgesamt 93 Milliäquivalenten pro 100 g Feststoff auf, wobei der Neutralisationsgrad bei 48 % liegt.

Beispiel 4

In einem 4-l-Dreihalskolben mit Rühr-, Kühl- und Heizvorrichtung werden 486 g Dimethyldiglykol vorgelegt und auf 130 °C erwärmt. In 3 Stunden wird eine Mischung aus 300 g Maleinsäureanhydrid, 100 g Styrol, 200 g n-Butylacrylat, 1400 g Methylmethacrylat und parallel dazu in 4 Stunden 114 g tert.-Butylperoctoat (70 %ig in Kohlenwasserstoffgemisch) zudosiert. Nach 1 Stunde bei 130 °C werden nochmals 5,6 g tert.-Butylperoctoat zugegeben, 2 Stunden gerührt, 720 g ®Ocenol 110/130 zugegeben und weitere 6 Stunden bei 135 °C gerührt. Nach Abkühlen auf 70 °C werden 27,2 g Kobaltoctoat und 72,5 g Bleioctoat in die Harzschmelze eingearbeitet. Die so erhaltene 80 %ige Harzschmelze wird in eine auf 50 °C erwärmte wäßrige Ammoniaklösung eindispergiert. Nach 4 Stunden Rühren bei 60 °C werden 41 g ®Ascinin R conz zugesetzt und durch KoOO-Filter abfiltriert. Die so erhaltene wäßrige Harzdispersion hat einen Festgehalt von 37,6 % und einen pH-Wert von 6,0. Das 100 %ige Harz weist einen Gehalt an Struktureinheiten der Formel -O-R von 26 Gew.-% und einen Gehalt an freien und neutralisierten Carboxylgruppen von insgesamt 183 Milliäquivalenten pro 100 g Feststoff auf, wobei der Neutralisationsgrad bei 24 % liegt.

Beispiel 5

In einem 6-l-Dreihalskolben mit Rühr-, Kühl- und Heizvorrichtung werden 455 g Dimethyldiglykol eingewogen und auf 130 °C erwärmt. In 3 Stunden wird eine Mischung aus 500 g Maleinsäureanhydrid, 400 g Styrol, 1100 g Methylmethacrylat und parallel dazu 114 g tert.-Butylperoctoat (70 %ig in Kohlenwasserstoffgemisch) in 4 Stunden zudosiert. Nach 1 Stunde Rühren bei 130 °C werden 5,6 g tert.-Butylperoctoat zugegeben, 2 Stunden gerührt, 1200 g ®Ocenol 110/130 zugegeben und 6 Stunden bei 130 °C gerührt. Danach werden 134,8 g N-Methylpyrrolidon zugegeben, auf 120 °C abgekühlt, 27,1 g Ethanol zugegeben, 1 Stunden gerührt, 281 g Butylglykol, 341 g ®Cardura E 10 und 3,6 g Triethylbenzylammoniumchlorid zugegeben und solange bei 90 °C gehalten bis die Gesamtsäurezahl konstant ist. Anschließend werden 36,3 g ethoxyliertes Nonylphenyl (NP 20) und 36,3 g Kobaltoctoat zugegeben und homogen eingearbeitet.

Die so erhaltene 80 %ige Harzschmelze wird in eine auf 50 °C erwärmte wäßrige Ammoniaklösung eindispergiert. Nach 4 Stunden Rühren bei 60 °C werden 54 g ®Ascinon R conz zugesetzt und durch KoOO-Filter abfiltriert. Die so erhaltene wäßrige Harzdispersion hat einen Festgehalt von 35,2 % und einen pH-Wert von 6,5. Das 100 %ige Harz weist einen Gehalt an Struktureinheiten der Formel -O-R von 34 Gew.-% und einen Gehalt an freien und neutralisierten Carboxylgruppen von insgesamt 141 Milliäquivalenten pro 100 g Feststoff auf, wobei der Neutralisationsgrad bei 32 % liegt.

Beispiel 6

In einem 6-l-Dreihalskolben mit Rühr-, Kühl- und Heizvorrichtung werden 455 g Dimethyldiglykol eingewogen und auf 130 °C erwärmt. In 3 Stunden wird eine Mischung aus 500 g Maleinsäureanhydrid, 400 g Styrol und 1100 g Methylmethacrylat und parallel dazu 114 g tert.-Butylperoctoat (70 %ig in Kohlenwasserstoffgemisch) zudosiert. Nach 1 Stunde bei 130 °C werden nochmals 5,6 g tert.-Butylperoctoat zugegeben und 2 Stunden bei 130 °C gehalten. Nach Zugabe von 1200 g ®Ocenol 110/130 wird 6 Stunden bei 135 °C gerührt, mit 134,8 g N-MEthylpyrrolidon verdünnt, 27,6 g Ethanol zugegeben und bei 120 °C 1 Stunde gerührt. Nach Zugabe von 195,5 g Butylglykol wird noch 2 Stunden bei 120 °C gerührt, auf 90 °C abgekühlt, 3,52 g Triethylbenzylammoniumchlorid und eine Mischung aus 63,3 g Butylglykol und 253 g 1,2-Epoxybutan zugegeben. Anschließend wird bei 90 °C gerührt bis die Gesamtsäurezahl konstant ist und dann 35,2 g ethoxyliertes Nonylphenol (NP 20) sowie 35,2 g Kobaltoctoat eingearbeitet.

Die so erhaltene 80 %ige Harzschmelze wird in eine wäßrige, ammoniakalische Lösung eindispergiert, 4 Stunden bei 60 °C gerührt, mit 52 g ®Ascinon R conz versetzt und durch KoOO-Filter filtriert.

Die so erhaltene wäßrige Harzdispersion hat einen Festgehalt von 38,8 % und einen pH-Wert von 7,2. Das 100 %ige Harz weist einen Gehalt an Struktureinheiten der Formel -O-R von 34 Gew.-% und einen Gehalt an freien und neutralisierten Carboxylgruppen von insgesamt 112 Milliäquivalenten pro 100 g Feststoff auf, wobei der Neutralisationsgrad bei 39 % liegt.

Die gemäß den Beispielen erhaltenen wäßrigen Harzdispersionen werden mit Eisenoxidpigmenten (®Bayferrox 160 M/180 M, Bayer AG; Pigmentierungshöhe: 30 % bezogen auf Harzfestkörper) und einem Dispergierhilfsmittel (®Dispex G 40, Krahn Chemie; 1 % bezogen auf Pigmente) zu Rotlacken auf einer Perlmühle angerieben und mit entmineralisiertem Wasser auf eine Spritzviskosität von 25 bis 30 Sekunden, gemessen in DIN-4-mm-Becher, eingestellt. Die Lacke werden auf entfettete Stahlbleche durch Spritzen appliziert. Folgende Werte wurden dabei erhalten:

| | Beispiele | | | | | |
|---|---|---|---|---|---|---|
| | 1 | 2 | 3 | 4 | 5 | 6 |
| Festkörper bei Spritzviskosität (%) | 46,8 | 41,4 | 42,4 | 40,1 | 39,6 | 44,1 |
| Gehalt organischer Lösemittel im Lack (%) | 5 | 5 | 6 | 5 | 6 | 7 |
| Lacklagerstabilität 1) 4 Wochen/40° C | a) | b) | b) | a) | a) | a) |
| Trockenschichtstärke nach Spritzapplikation (µm) | 40 | 40 | 40 | 40 | 40 | 40 |
| Klebfreitrocknung bei Raumtemperatur (Stunden) | 2,5 | 1,5 | 2,5 | 2,5 | 1,5 | 1,5 |
| Pendelhärte nach König (sec) | | | | | | |
| nach 1 Tag Trocknung | 68 | 64 | 25 | 73 | 42 | 45 |
| nach 7 Tagen Trocknung | 85 | 115 | 49 | 92 | 81 | 90 |
| Glanz nach Gardner 20° /60° | 67/85 | 69/88 | 78/90 | 74/86 | 69/87 | 71/89 |
| Anlösbarkeit mit Superbenzin nach 7 Tagen Trocknung (Belastungsdauer 1 Minuten) 2) | 1 | 2 | 1 | 0 | 1 | 1 |

1) a) = ohne Befund, b) = Bodensatz, aufrührbar
2) 0 = ohne Befund, 5 = völlig abgelöst

Die gemäß den Beispielen erhaltenen wäßrigen Bindemittel zeigen auch bei der Verwendung in Holzlasuren oder in Maler- bzw. DIY-Lacken ein hohes Eigenschaftsniveau.

Sowohl Lasuren als auch Lacke zeigen sehr gute Lagerstabilität. Die Verarbeitbarkeit, insbesondere die Verstreichbarkeit ist gut. Es wurden schnell trocknende, harte, glänzende Überzüge erhalten, die darüber hinaus nur eine geringe Vergilbungstendenz zeigen.

## Patentansprüche

1. Oxidativ vernetzbare, wasserverdünnbare Bindemittel, bestehend im wesentlichen aus einem modifizierten Copolymerisat des Molekulargewichtsbereichs Mw 6000 bis 160000 von olefinisch ungesättigten Verbindungen, gekennzeichnet durch
   a) einen, die Wasserverdünnbarkeit bewirkenden, Gehalt an eingebauten, zu 10 bis 100 % neutralisierten Carboxylgruppen von insgesamt 60 bis 250 Milliäquivalenten pro 100 g Feststoff und
   b) einen Gehalt an chemisch eingebauten, Teil einer Estergruppe bildenden Resten der Formel

   -O-R

   von 15 bis 50 Gew.-%, wobei
   R für ein- und/oder mehrfach olefinisch ungesättigte aliphatische Kohlenwasserstoffreste eines über 166 liegenden Molekulargewichts mit 12 bis 22 Kohlenstoffatomen steht.

2. Verfahren zur Herstellung von Bindemitteln gemäß Anspruch 1, dadurch gekennzeichnet, daß man
   a) durch radikalisch initiierte Copolymerisation von olefinisch ungesättigten Dicarbonsäureanhydriden mit anderen olefinisch ungesättigten Monomeren ein, intramolekulare Carbonsäureanhydridgruppen der Formel

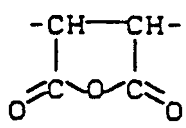

   aufweisendes Copolymerisat des Molekulargewichts Mw 5000 bis 80000 und eines Anhydridäquivalentgewichts von 240 bis 1960 herstellt,
   b) anschließend mindestens 50 % der in dem Copolymerisat vorliegenden Säureanhydridgruppen mit einwertigen Alkoholen der Formel

   R-OH,

   wobei R die oben genannte Bedeutung hat, unter ringöffnender Esterbildung zur Reaktion bringt, wobei gegebenenfalls vor, gleichzeitig oder im Anschluß hieran eine analoge Umsetzung von bis zu 50 % der Anhydridgruppen mit einwertigen gesättigten Alkoholen eines unter 184 liegenden Molekulargewichts erfolgt und
   c) die in dem Reaktionsprodukt gemäß Stufe b) vorliegenden Carboxylgruppen, gegebenenfalls nach Umsetzung einer Teilmenge der Carboxylgruppen mit organischen Epoxidverbindungen zu 10 bis 100 % (der dann noch vorliegenden Carboxylgruppen) durch Neutralisation mit einer Base in Carboxylatgruppen überführt.

3. Verfahren gemäß Anspruch 2, dadurch gekennzeichnet, daß man vor, gleichzeitig mit und/oder im Anschluß an die Modifizierung mit den ungesättigten Alkoholen bis zu 15 % der in dem Copolymerisat vorliegenden Säureanhydridgruppen mit einwertigen Alkoholen eines unter 184 liegenden Molekulargewichts unter ringöffnender Esterbildung zur Reaktion bringt und nach Beendigung der Esterbildungsreaktionen die vorliegenden Carboxylgruppen zumindest teilweise neutralisiert.

4. Verfahren gemäß Anspruch 3, dadurch gekennzeichnet, daß man die Umsetzung mit den einwertigen Alkoholen eines unter 184 liegenden Molekulargewichts im Anschluß an die Modifizierung mit den ungesättigten Alkoholen durchführt,

5. Verfahren gemäß Anspruch 2 bis 4, dadurch gekennzeichnet, daß man vor der Neutralisation 0,1 bis 70 % der nach den Esterbildungsreaktionen vorliegenden Carboxylgruppen durch Umsetzung mit Epoxidgruppen aufweisenden Verbindungen in Estergruppen überführt,

6. Verwendung der Bindemittel gemäß Anspruch 1 in wasserverdünnbaren Lacken und Beschichtungsmassen.

## Claims

1. Binders which can be cross-linked oxidatively and diluted with water, consisting substantially of a modified copolymer in the molecular weight range of from Mw 6000 to 160000 of olefinically unsaturated compounds, characterized by
   a) containing a total of from 60 to 250 milliequivalents per 100 g of solids of incorporated carboxyl groups neutralized to an extent of from 10 to 100% which render the binders dilutable with water and
   b) containing from 15 to 50% by weight of chemically incorporated radicals of the formula

   -O-R

   which form part of an ester group, wherein
   R stands for mono- and/or polyolefinically unsaturated aliphatic hydrocarbon groups with from 12 to 22 carbon atoms having a molecular weight above 166.

2. A process for the preparation of binders according to Claim 1, characterized in that
   a) a copolymer having a molecular weight Mw of from 5000 to 80000 and an anhydride equivalent weight of from 240 to 1960 and containing intramolecular carboxylic acid anhydride groups of the formula

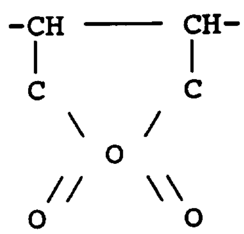

   is prepared by radically initiated copolymerisation of olefinically unsaturated dicarboxylic acid anhydrides with other olefinically unsaturated monomers,
   b) at least 50% of the acid anhydride groups present in the copolymer are subsequently reacted with monohydric alcohols of the formula

   R-OH,

   wherein R has the meaning indicated above with ring opening ester formation, an analogous reaction of up to 50% of the anhydride groups with monohydric saturated alcohols having a molecular weight below 184 optionally taking place before, simultaneously or thereafter, and
   c) from 10 to 100% of the carboxyl groups present in the reaction product of stage b) are converted into carboxylate groups by neutralization with a base, optionally after reaction of some of the carboxyl groups with organic epoxide compounds (the 10 to 100% in that case referring to the carboxyl groups still present after this reaction).

3. A process according to Claim 2, characterized in that before, simultaneously with and/or after the modification with the unsaturated alcohols, up to 15% of the acid anhydride groups present in the copolymer are reacted with monohydric alcohols having a molecular weight below 184 with ring opening ester formation, and after termination of the ester forming reactions, the carboxyl groups present are at least partly neutralized.

4. A process according to Claim 3, characterized in that the reaction with the monohydric alcohols having a molecular weight below 184 is carried out after the modification with the unsaturated alcohols.

5. A process according to Claims 2 to 4, characterized in that prior to neutralization, from 0.1 to 70% of the carboxyl groups present after the ester forming reactions are converted into ester groups by a reaction with compounds containing epoxide groups.

**6.** Use of the binders according to Claim 1 in water dilutable lacquers and coating compounds.

**Revendications**

**1.** Liants diluables à l'eau, réticulables par voie d'oxydation, constitués principalement d'un copolymère modifié de poids moléculaire $M_p$ compris dans la plage de 6000 à 16 000, de composés à non-saturation oléfinique, caractérisés par

a) une teneur en groupes carboxyle incorporés neutralisés à 10-100 %, responsables de l'aptitude à la dilution par l'eau, au total de 60 à 250 milliéquivalents par 100 g de matière solide et

b) une teneur en restes incorporés chimiquement, faisant partie d'un groupe ester, de formule

-O-R

de 15 à 50 % en poids,

R représentant des restez d'hydrocarbures aliphatiques à mono-insaturation et/ou polyinsaturation oléfinique d'un poids moléculaire supérieur à 166, avec 12 à 22 atomes de carbone.

**2.** Procédé de production de liants suivant la revendication 1, caractérisé

a) en ce qu'on prépare par copolymérisation, déclenchée par des radicaux, d'anhydrides d'acides dicarboxyliques à non-saturation oléfinique avec d'autres monomères à non-saturation oléinique, un copolymère intramoléculaire présentant des groupes anhydride d'acide carboxylique de formule

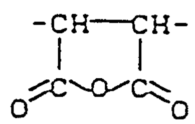

de poids moléculaire $M_p$ compris dans la plage de 5000 à 80 000 et de poids équivalent d'anhydride de 240 à 1960,

b) ensuite, on fait réagir au moins 50 % des groupes anhydride d'acide présents dans le copolymère avec des alcools monovalents de formule

R-OH,

dans laquelle R a la définition indiquée ci-dessus, avec formation décyclisante d'un ester, en conduisant, le cas échéant, avant, pendant ou après cette réaction, une réaction analogue de jusqu'à 50 % des groupes anhydride avec des alcools saturés monovalents de poids moléculaire inférieur à 184 et

c) on transforme en groupes carboxylate par neutralisation avec une base les groupes carboxyle présents dans le produit de réaction selon l'étape b), le cas échéant après réaction d'une quantité partielle des groupes carboxyle avec des époxydes organiques, en proportion de 10 à 100 % (des groupes carboxyle qui sont alors encore présents).

**3.** Procédé suivant la revendication 2, caractérisé en ce qu'on fait réagir avant, pendant et/ou après la modification avec les alcools non saturés, jusqu'à 15 % des groupes anhydride d'acide présents dans le copolymère avec des alcools monovalents de poids moléculaire inférieur à 184 avec formation décyclisante d'un ester et, lorsque les réactions de formation d'un ester sont terminées, on neutralise au moins partiellement les groupes carboxyle présents.

**4.** Procédé suivant la revendication 3, caractérisé en ce qu'on conduit la réaction avec les alcools monovalents de poids moléculaire inférieur à 184 à la suite de la modification avec les alcools non saturés.

**5.** Procédé suivant les revendications 2 à 4, caractérisé en ce qu'on transforme en groupes ester avant la neutralisation 0,1 à 70 % des groupes carboxyle présents après les réactions de formation d'un ester, par réaction avec des composés porteurs de groupes époxyde.

6. Utilisation des liants suivant la revendication 1 dans des peintures et des compositions de revêtement diluables à l'eau.